# EUROPÄISCHE PATENTSCHRIFT

(11) **EP 2 885 335 B1**
(45) Veröffentlichungstag und Bekanntmachung des Hinweises auf die Patenterteilung: **16.12.2020**
(21) Anmeldenummer: 13745356.9
(22) Anmeldetag: 03.08.2013
(51) Int. Cl.: C08G 63/672, D21C 9/08, D21H 17/53

(54) **POLYESTER FÜR DIE PAPIERINDUSTRIE**
POLYESTER FOR THE PAPER INDUSTRY
POLYESTER POUR L'INDUSTRIE DU PAPIER

(30) Priorität: 18.08.2012 DE 102012016461
(43) Veröffentlichungstag der Anmeldung: 24.06.2015
(73) Patentinhaber: Archroma IP GmbH, 4153 Reinach (CH)
(72) Erfinder: KOHLER, Achim, 75081 Heilbronn (DE); MORSCHHAEUSER, Roman, 55122 Mainz (DE); COWMAN, John, Stuart, Heaton Bradford BD9 5PW (GB); LEONE-KAMMLER, Antonella, 4142 Münchenstein (CH)
(74) Vertreter: Ricker, Mathias
(86) Internationale Anmeldenummer: PCT/EP2013/002331
(87) Internationale Veröffentlichungsnummer: WO 2014/029468

(56) Entgegenhaltungen:
- EP-A1- 0 964 015
- WO-A1-2009/138177
- US-A1- 2011 180 226

## Beschreibung

Die Erfindung betrifft die Verwendung von Polyestern zur Modifizierung hydrophober Oberflächen, insbesondere in Papier-und Kartonherstellungsprozessen, insbesondere in Prozessen zum Recyceln von Papier und Karton, sowie in der Textil- Zellstoff und Druckindustrie.

Der Energieaufwand bei der Produktion von Recyclingpapier ist deutlich geringer (nur ca. ein Drittel) als bei der Herstellung von neuem Papier aus Holz (Frischfaserpapier), der Verbrauch an Wasser beträgt nur 15 %, die Gewässerbelastung beträgt nur etwa 5 %. Damit leistet das Papierrecycling einen wichtigen Beitrag zum Umweltschutz.

Ein großes Problem im Recylingverfahren stellen Kleber aus Selbstklebeetiketten, Hotmelts, klebende Strichbestandteile recycelter gestrichener Papiere und Kartons usw. dar, die trotz immer größeren mechanischen Reinigungsaufwands, nicht vollständig aussortiert können. Sie stellen eine wesentliche Ursache für sogenannte "Stickies" und "White Pitch" dar, die sich aufgrund ihrer hydrophoben Eigenschaften häufig an heißen und bewegten Teilen und in den Sieben und Filzen von Papiermaschinen ablagern und damit zu Papierbahnabrissen führen können.

Seit Jahren werden bereits Produkte als Passivierungsmitteln zur Behandlung klebender Verunreinigungen wie Stickies angeboten. Diese gelösten Produkte sollen die Oberfläche der klebrigen Verunreinigungen hydrophiler machen und dadurch benetzbarer halten, wodurch die Affinität zu hydrophoben Oberflächen, beispielsweise Siebe, Filze und Walzen reduziert wird.

Auch bei der Herstellung von Papier aus Holz und Zellulose verursachen organische Komponenten wie beispielsweise Harzanteile, sogenannte "pitch", störende Ablagerungen während des Prozesses und führen zu Qualitätsminderungen der Produkte.

In WO 2011015297 wird beschrieben, dass eine Verringerung der Klebrigkeit von Stickies reduziert wird durch den Einsatz einer Polymerdispersion aus Copolymeren der (Meth)acrylsäure.

In zahlreichen Schriften werden Polyester als gute Dispergiermittel beschrieben, die zudem die Oberfläche von Oberflächen modifizieren und ein Anhaften von Partikeln erschweren.

Polyester aus aromatischen Dicarbonsäuren, wie Terephthalsäure oder Isophthalsäure, und Diolen, wie Alkylenglykol sind seit langem bekannt und insbesondere deren Verwendung als "Soil Release Polymere (SRP)" in Wasch- und Reinigungsmitteln beschrieben.

In DE-A-10 2007 051279 werden abwaschbare Farbstoffmischungen mit nichtionischen Polyestern beansprucht und deren exzellente Farbgebung, insbesondere in polaren Zubereitungen, wie Wasch- und Spülmitteln bei gleichzeitig geringem Anfärbeverhalten der Textilien und Oberflächen ausgelobt.

DE 1 194 363 offenbart ein Verfahren zum Appretieren und antistatischen Ausrüsten von Fasern oder Textilien mit einer wässrigen Lösung eines aus mehrwertigen Alkoholen und mehrbasischen Carbonsäuren erhaltenen polymerisierbaren Polyesters.

DE 10 2008 023 803 beschreibt Additive für Wasch- und Reinigungsmittel erhalten durch Polykondensation einer aromatischen Dicarbonsäure und/oder deren C₁-C₄-Alkylestern, Ethylenglykol, gegebenenfalls 1,2-Propylenglykol, gegebenenfalls Polyethylenglykol mit einer mittleren Molmasse von 200 bis 8000 g/mol, gegebenenfalls C₁- bis C₄-Alkylpolyalkylenglykolether mit einer mittleren Molmasse des Polyalkylenglykolethers von 200 bis 5000 und gegebenenfalls einer polyfunktionellen Verbindung und lobt beispielsweise deren feste Konsistenz und Hydrolysestabilität aus. Explizit offenbarte Polyester werden z.B. unter Verwendung von Polyethylenglykol 6000 und einer Mischung aus Methylpolyethylenglykol 750 und Methylpolyethylenglykol 2000 hergestellt.

DE 198 26 356 beschreibt Oligoester, die erhalten werden durch Polykondensation von Dicarbonsäuren oder deren Estern, Ethylenglykol und/oder Propylenglykol, Polyethylenglykol, einem wasserlöslichen Anlagerungsprodukt von einem Alkylenoxid an C₁-C₂₄-Alkohole und einem oder mehrerer Polyole mit 3 bis 6 Hydroxylgruppen, die z. B. als schmutzablösende Polymere in Waschmitteln dienen. Explizit werden z. B. Polyester offenbart, hergestellt aus Dimethyltherephthalat, Ethylenglykol, 1,2-Propylenglykol, Polyethylenglykol 1500, einer Mischung aus Methylpolyethylenglykol 750 und Methylpolyethylenglykol 1820 und Pentaerythritol.

In US 5,415,739 wird ein Verfahren zur Reduzierung der Klebrigkeit von mit Klebstoffen kontaminierten Papiermassen beschrieben, das dadurch gekennzeichnet ist, dass der Papiermasse ein wasserlösliches Terpolymer zugesetzt wird, wobei das Terpolymer hervorgegangen ist aus Polyethylenglykol in Mengen > 80 Gew.-%, bezogen auf das Terpolymer, hergestellt aus der Umsetzung von Phthalsäure oder -ester, Glykol und Polyethylenglykol in Gegenwart von Antimontrioxid.

Die US 2011/180226 A1 beschreibt die Verwendung von Polyestern zur Erhöhung der Oberflächenspannung sowie zur Eliminierung unerwünschter Verklebungsreste im Paperrecyclingverfahren.

Die Verwendung dieser dort beschriebenen Terpolymere zur Vermeidung von Verklebungen im Recyclingprozess ist jedoch im Ergebnis unbefriedigend. Zudem ist Sb₂O₃ als eine möglicherweise krebserzeugende Substanz eingestuft und dessen Verwendung unerwünscht.

Aufgabe ist es daher ein umweltfreundliches Produkt zur Verfügung zu stellen, das es erlaubt, die unerwünschten Verklebungsreste im Papierrecyclingprozess effizient zu eliminieren oder signifikant zu reduzieren.

Es wurde überraschend gefunden, dass sich durch die Verwendung von bestimmten Polyester insbesondere in Papier-und Kartonherstellungsprozessen, insbesondere in Prozessen zum Recyceln von Papier und Karton, sowie in der Textil- Zellstoff und Druckindustrie hydrophobe Oberflächen effektiv modifizieren lassen.

Gegenstand der Erfindung ist daher die Verwendung von Polyestern zur Erhöhung der Oberflächenspannung und Verbesserung des hydrophilen Verhaltens hydrophober Oberflächen, wobei diese Polyester erhältlich sind durch Polymerisation von
a) Terephthalsäuredimethylester, und
b) Ethylenglykol, und
c) 1,2-Propylenglykol, und
d) ein oder mehrerer Polyalkylenglykole mit gewichtsmittleren Molekulargewichten im Bereich von 1000 bis 2000 g/mol und
e) einem einzigen Polyethylenglykolmonomethylester mit einem gewichtsmittleren Molekulargewicht im Bereich von 1050 bis 1350 g/mol,
f) entweder in Gegenwart oder in Abwesenheit von einer oder mehreren vernetzend wirkenden Verbindungen mit 3 bis 6 zur Polykondensation befähigten Funktionen, insbesondere Säure-, Alkohol- oder Esterfunktionen,
mit der Maßgabe, dass die Komponenten d) in Gewichtsmengen < 80 %, bezogen auf die Gewichtsmenge der durch die Polymerisation erhaltenen Polyester, eingesetzt wird.

In einer bevorzugten Ausführungsform der Erfindung findet die Umesterung und Kondensation der Komponenten a) bis e) entweder in Gegenwart oder in Abwesenheit der Komponente f) in Gegenwart von Umesterungs- und Kondensationskatalysatoren des Standes der Technik, wie beispielsweise Titantetraisopropylat/ Natriumacetat, Dibutylzinnoxid, Alkali- oder Erdalkalimetallalkoholate statt.

In einer außerordentlich bevorzugten Ausführungsform der Erfindung sind die erfindungsgemäß verwendeten Polyester dadurch gekennzeichnet, dass die Polyester erhältlich sind durch Polymerisation der Komponenten a) bis f) ohne weitere Komponenten.

In einer weiteren außerordentlich bevorzugten Ausführungsform der Erfindung sind die erfindungsgemäß verwendeten Polyester dadurch gekennzeichnet, dass die Polyester erhältlich sind durch Polymerisation der Komponenten a) bis e) ohne weitere Komponenten.

Erfindugsgemäß ist Komponente a) Terephthalsäuredimethylester.

Erfindungsgemäß sind als Komponente d) eine oder mehrere Verbindungen, ausgewählt aus Polyethylenglykolen mit gewichtsmittleren Molekulargewichten von 1.000 bis 2.000 g/mol.

Außerordentlich bevorzugt ist als Komponente d) Polyethylenglykol mit einem gewichtsmittleren Molekulargewicht von 1.500 g/mol.

Erfindungsgemäß als Komponente e) ist ein einziger Polyethylenglykolmonomethylether mit gewichtsmittleren Molekulargewichten von ca. 1.050 - 1.350 g/mol.

Außerordentlich bevorzugt ist als Komponente e) ist Polyethylenglykolmonomethylether mit einem gewichtsmittleren Molekulargewicht von 1.250 g/mol.

Bevorzugt sind als Komponente f) Verbindungen ausgewählt aus der Gruppe, bestehend aus Zitronensäure, Äpfelsäure, Weinsäure und Gallussäure, 2,2-Dihydroxymethylpropionsäure, Pentaerythritol, Glycerol, Sorbitol, Mannitol, 1,2,3-Hexantriol, Benzol-1,2,3-tricarbonsäure (Hemimellithsäure), Benzol-1,2,4-tricarbonsäure (Trimellithsäure) und Benzol-1,3,5-tricarbonsäure (Trimesithsäure). Besonders bevorzugt sind als Komponente f) Verbindungen ausgewählt aus Pentaerythritol und Glycerol.

Außerordentlich bevorzugt ist als Komponente f) Pentaerythritol. Bevorzugt sind Polyester, erhältlich durch Polymerisation der Komponenten a) bis e) entweder in Gegenwart oder in Abwesenheit der Komponente f) in folgenden Molverhältnissen, jeweils bezogen auf 1 Mol Komponente a):
0,2 bis 0,8 Mol, vorzugsweise 0,3 bis 0,7 Mol, insbesondere 0,4 bis 0,6 Mol ganz besonders bevorzugt 0,5 bis 0,6 der Komponente b), und
1,0 bis 2,0 Mol, vorzugsweise 1,1 bis 1,6 Mol, insbesondere 1,2 bis 1,5 Mol, ganz besonders bevorzugt 1,3 bis 1,4 Mol der Komponente c), und
0,05 bis 2,0 Mol, vorzugsweise 0,10 bis 1,0 Mol, insbesondere 0,2 bis 0,8 Mol, ganz besonders bevorzugt 0,25 bis 0,5 Mol der Komponente d), und
0,01 bis 1,0 Mol, vorzugsweise 0,05 bis 0,8 Mol, insbesondere 0,1 bis 0,5 Mol, ganz besonders bevorzugt 0,11 bis 0,3 Mol, Komponente e), und
entweder in Gegenwart von 0,00001 bis 1,0 Mol, vorzugsweise 0,00001 bis 0,5 Mol, insbesondere 0,0001 bis 0,01 Mol, ganz besonders bevorzugt 0,0002 bis 0,01 Mol, Komponente f) oder in Abwesenheit von Komponente f).

Die Polyester haben im Allgemeinen gewichtmittlere Molekulargewichte im Bereich von 700 bis 50.000 g/mol, bevorzugt von 800 bis 25.000 g/mol, insbesondere 1.000 bis 15.000 g/ mol, besonders bevorzugt 1.200 bis 12.000 g/mol. Das gewichtsmittlere Molekulargewicht wird bestimmt mittels Größenausschlusschromatographie in wässriger Lösung unter Verwendung einer Kalibrierung mit Hilfe eng verteiltem Polyacrylsäure-Na-Salz Standard.

Bei den erfindungsgemäßen Polyestern handelt es sich vorzugsweise um nichtionische Polyester.

In einer bevorzugten Ausführungsform sind die erfindungsgemäß verwendeten Polyester dadurch gekennzeichnet, dass sie keine Restmonomere ausgewählt aus Polyethylenglykolen und Methylpolyethylenglykolen mit gewichtsmittleren Molekulargewichten unterhalb von 1.000 g/mol enthalten, die aus toxikologischer und ökotoxikologischer Sicht unerwünscht sind.

In einer bevorzugten Ausführungsform sind die erfindungsgemäß verwendeten Polyester dadurch gekennzeichnet, dass der Gewichtsanteil der Restmonomere aus den zur Polymerisation eingesetzten Komponenten a) bis e) bzw. f) im Polyester, jeweils < 1 % bezogen auf das Gewicht des Polyesters beträgt.

In einer weiteren bevorzugten Ausführungsform werden die erfindungsgemäß verwendeten Polyester als wässrige Dispersion verwendet, wobei die erfindungsgemäß verwendeten Polyester in Konzentrationen von 10 bis 30 Gew.-% bezogen auf die fertige, wässrige Dispersion vorliegen, besonders bevorzugt von 15 bis 25 Gew.-% und außerordentlich bevorzugt in der Konzentration von 20 Gew-%, bezogen auf die fertige, wässrige Dispersion.

Die oben beschriebenen Polyester zeichnen sich dadurch aus, dass sie Oberflächen von Materialien mit niedriger Oberflächenenergie und ausgeprägtem hydrophobem Verhalten, wie Polyestergewebe, Filze, Siebe und Walzen dahingehend verändern, dass durch Adsorption der oben beschriebenen Polyester die Oberflächenspannung erhöht wird und die Oberflächen hydrophiler werden.

So werden in Gegenwart der erfindungsgemäß verwendeten Polyester die hydrophoben Oberflächen der verklebenden Verunreinigungen, die im Papierrecyclingprozess im sogenannten Pulp vorliegen, hydrophiler und die Ablagerungstendenzen der klebrigen Teilchen auf hydrophoben Oberflächen, beispielsweise Siebe, Filze und Walzen reduziert.

Die erfindungsgemäß verwendeten Polyester können auch hydrophobe Oberflächen, wie beispielsweise Siebe, Filze und Walzen modifizieren und diesen hydrophilere Eigenschaften verleihen, wodurch Ablagerungstendenzen von Stickies minimiert werden.

Des Weiteren wird durch die erfindungsgemäße Verwendung der oben beschriebenen Polyester die Benetzbarkeit von hydrophoben Oberflächen, beispielsweise von Polyestergewebe signifikant verbessert.

Weiter von Vorteil ist, dass die oben beschriebenen Polyester ein ausgezeichnetes Dispergiervermögen aufweisen. Durch Verwendung der oben beschriebenen Polyester lassen sich wässrige Dispersionen von hydrophoben Fasern, beispielsweise Polyesterfasern oder Glasfasern herstellen.

Ebenso vorteilhaft ist die Verwendung der oben beschriebenen Polyester zur Verbesserung des Druckverhaltens von ölbasierenden Druckfarben auf hydrophoben Oberflächen.

Die Verwendung der oben beschriebenen Polyester kann in der Weise erfolgen, dass diese im Papierherstellverfahren oder dem Papierrecyclingverfahren der Papierfasermasse in Mengen von bevorzugt 200 bis 1.000 g Polyester (100 % Aktivsubstanz) pro Tonne trockener Papierfaser zugeführt, dort homogen verteilt wird und zur Wirkung kommt. Die Zugabe der erfindungsgemäßen Polyester erfolgt in Form einer wässrigen Dispersion, bevorzugt als 20 %ige, wässrige Dispersion. Die Mengenangabe bezieht sich auf 100 % Polyester.

Die Verwendung der oben beschriebenen Polyester kann auch in der Weise erfolgen, dass während des Papierherstellverfahrens oder dem Papierrecyclingverfahren Oberflächen, wie beispielsweise Walzen oder Filze mit wässrigen Lösungen, enthaltend die oben beschriebenen Polyester, besprüht werden. Diese wässrigen Lösungen enthalten die erfindungsgemäß verwendeten Polyester, bevorzugt in Gewichtsmengen von 0,01 bis 0,05 %, bezogen auf die Sprühlösung

Die nachfolgenden Beispiele sollen die Erfindung erläutern ohne sie darauf einzuschränken. Alle Prozentangaben sind, sofern nicht explizit anders angegeben, als Gewichtsprozent (Gew.-%) zu verstehen.

### Beispiele:

### Herstellung von Polyester 1

In einem 1-I Vierhalskolben mit KPG-Rührer, Innenthermometer, Vigreux-Kolonne, Destillationsbrücke, N₂-Überleitung (5 l/h) und Anschütz-Thiele-Vorstoß wurden 164,4 g (0,85 Mol) Terephthalsäuredimethylester, 87,9 g (1,155 Mol) 1,2-Propandiol, 29,5 g (0,475 Mol) Ethylenglykol, 1,14 g (0,008 Mol) Pentaerytrit und 0,75 g (0,0009 Mol) Natriumacetat vorgelegt und das Reaktionsgemisch anschließend unter N₂-Überlagerung (5 l/h), auf 60 °C Innentemperatur unter Rühren bei einer Rührgeschwindigkeit von 50 - 100 U/min, hochgeheizt. Nach Schließung der N₂-Überlagerung wurden 0,2 g (0,0007 Mol) Titantetraisopropylat zugegeben. Anschließend wurde die Rührgeschwindigkeit auf 300 U/min erhöht und der Ansatz innerhalb von 2 h auf eine Innentemperatur von 150 °C und in weiteren 2 h auf eine Innentemperatur von 200 °C hochgeheizt. Ab einer Innentemperatur von 170 °C wurde die N₂-Überlagerung wieder geöffnet. Das Reaktionsgemisch wurde 2 h bei 200 °C erhitzt und entstehendes Methanol abdestilliert, das in einer mit Eis gekühlten Vorlage kondensiert wurde. Anschließend wurde die Reaktionsmischung auf Raumtemperatur abgekühlt und 328,7 g (0,219 Mol) Polyethylenglykol 1500 und 137,8 g (0,11 Mol) Polyethylenglykolmonomethylester 1250 zugegeben. Die Mischung wurde unter und N₂-Überlagerung (5 l/h), auf 215 °C Innentemperatur unter Rühren bei einer Rührgeschwindigkeit von 300 U/min, hochgeheizt, die N₂-Überleitung geschlossen und der Druck innerhalb von 2 h auf 150 mbar und innerhalb von weiteren 2 h auf 10 mbar gesenkt und währenddessen Glykol abdestilliert. Es wurde 2 h bei 215 °C und 10 mbar nachkondensiert und anschließend auf 140 - 150 °C abgekühlt. Anschließend wurde mit N₂ belüftet und die heiße Schmelze ausgetragen. Man erhielt eine erstarrte, beige Polymerschmelze.

### Herstellung von Vergleichspolyester 1:

In einem 1-I Vierhalskolben mit KPG-Rührer, Innenthermometer, Vigreux-Kolonne, Destillationsbrücke, N₂-Überleitung (5 l/h) und Anschütz-Thiele-Vorstoß wurden folgende Edukte vorgelegt: 41,53 g (0,25 Mol) Terephthalsäuredimethylester, 27,13 g (0,437 Mol) Ethylenglykol, 362,5 g (0,29 mol) Methylpolyethylenglykol 1250, 0,5 g Natriumacetat wasserfrei (NaOAc) und 0,13 g Titantetraisopropylat (Ti(iPr)₄.

Das Gemisch wurde auf ca. 160 °C (ca. 15 - 20 min) erhitzt und das entstehende Methanol wurde destilliert. Während der Destillation wurde die Temperatur langsam innerhalb von 3 h auf 210 °C erhöht (ab einer Innentemperatur von ca. 180 °C wurde N₂ (5 l/h) übergeleitet). Es wurde solange Methanol abdestilliert bis die Kopftemperatur unterhalb von 55 °C war (min. 4 h/210 °C Nachrühren). Anschließend wurde auf 195 °C abgekühlt und innerhalb von einer Stunde der Druck auf 10 mbar reduziert und Glykol abdestilliert (Kopftemperatur bis ca. 150 °C). Anschließend wurde 4 h bei 10 mbar/195 °C nachkondensiert. (am Ende lag die Kopftemperatur unterhalb von 75 - 80 °C). Für 5 min wurde das Vacuum auf 5 mbar reduziert, dann die Apparatur mit N₂ belüftet (Ölbad unter Kolben, Tᵢ 185 - 195 °C) und die heiße Schmelze auf ein Blech ausgetragen.

### Messung von Oberflächenspannungen:

**Tabelle 1: Oberflächenspannung einer unbehandelten Polyesterfaser X (die Polyesterfaser X besteht nicht aus dem Material der erfindungsgemäßen Polyester), sowie einer Polyesterfasern X, behandelt mit einer 0,04 Gew.-%igen wässrigen Dispersion des erfindungsgemäßen Polyesters 1, sowie dem Vergleichspolyester 1.**

| Polyesterfaser X | Oberflächenspannung [mN/m] |
|---|---|
| unbehandelt | 45,5 |
| Polyester 1 | 61,2 |
| Vergleichspolyester 1 | 53,3 |
| Gerät: | SITA Pro Line T15 Blasendrucktensiometer |
| Einstellung: | Auto Mode |
| Blasenlebensdauer: | 15 ms bis 15 s |
| Messung: | bei 15 s |
| Probelösung: | 0,04 Gew.-% Polyester 1 bzw. Vergleichspolyester 1 In destilliertem Wasser |
| Temperatur: | 20 °C |

### Messung von Ablagerungen:

**Tabelle 2: Ablagerung von Klebematerial haltigem Papierbrei auf einem Polyestersieb a) mit nicht modifizierter Oberfläche, b) modifizierte mit Polyester 1, c) modifiziert mit Vergleichspolyester 1**

| Probe | Konzentration Polyester [Gew.- %] | Polyestersieb vor Ablagerung [g] | Polyesterdraht nach 15 Minuten Kontaktzeit [g] | Gewichtszunahme [mg] | Reduktion der Ablagerung [%] |
|---|---|---|---|---|---|
| a (Kontrolle) | 0 | 308,7 | 315,9 | 7,2 | 0 |
| b (Polyester 1) | 0,1 | 311,0 | 311,7 | 0,7 | 90,3 |
| c (Vergleichspolyester 1) | 0,1 | 305,6 | 310,2 | 4,6 | 36,1 |

Das verwendete Polyestersieb besteht nicht aus dem Material der erfindungsgemäßen Polyester.

Ein Klebeettikett, bestehend aus 75 g Papier und 25 g eines drucksensitiven Acrylklebers, der wiederum zu 80 Gew-% aus 2-Polyethylhexylacrylate-Acrylat-Copolymer und 20 Gew.-% Styrolbutadien Copolymer besteht, wird auf einen 10 g schweren Zellstoffbogen aus gebleichtem Birkenholz geklebt. Dieser wird mit 750 ml Leitungswasser versetzt und bei 50 °C 2 Minuten in einem Mischer bei hoher Drehzahl zu einem homogenen Papierbrei verrührt. Die erhaltene Mischung wird mit Leitungswasser auf ein Gesamtvolumen von 1000 ml aufgefüllt und in 200 ml Proben aufgeteilt.

Es werden je 0,1 gewichtsprozentige Lösungen aus Polyester 1 und Vergleichpolyester 1 mit je 100 ml Leitungswasser hergestellt. 3 Polyestersiebe der Marke Primobond SF (Heimbach) mit den Maßen 30 x 50 mm werden auf die Kommastelle exakt gewogen. Je ein Polyestersieb wird 10 Sekunden lang bei Raumtemperatur entweder in reines Leitungswasser oder in die 0,1 gewichtsprozentige Polyester 1-Lösung oder in die 0,1 gewichtsprozentige Vergleichspolyester 1 -Lösung je 10 Sekunden lang eingetaucht und anschließend aus dem Leitungswasser oder den 0,1 gewichtsprozentigen Lösungen genommen und in ein leeres 400 ml Becherglas gegeben. Die 400 ml Bechergläser werden je mit 200 ml Papierbrei, gefüllt. Je ein Polyestersieb, das entweder unbehandelt ist (Leitungswasser, Kontrolle) oder aber in der oben beschriebenen Weise (mit Polyester 1 oder Vergleichspolyester 1) behandelt ist, wird in die 200 ml Probe a), b) oder c) gegeben und diese 15 Minuten lang bei 200 Umdrehungen/ Minute gerührt. Die Polyestersiebe werden den Proben entnommen und mit kaltem Wasser abgespült, an der Luft getrocknet und gewogen.

Die Ergebnisse zeigen, dass die Verwendung von Polyester 1 dazu führt, dass eine deutlich geringere Menge an Klebemittel an dem Polyestersieb anhaftet (90,3 % Verbesserung), im Vergleich zu dem unbehandelten Polyestersieb (0 % Verbesserung) und im Vergleich zur Verwendung von Vergleichspolyester 1 (36,1 % Verbesserung).

## Patentansprüche

1. Verwendung von Polyestern zur Erhöhung der Oberflächenspannung und Verbesserung des hydrophilen Verhaltens hydrophober Oberflächen, **dadurch gekennzeichnet, dass** die Polyester erhältlich sind durch Polymerisation von
a) Terephthalsäuredimethylester, und
b) Ethylenglykol,
c) 1,2-Propylenglykol, und
d) ein oder mehrerer Polyalkylenglykole mit gewichtsmittleren Molekulargewichten im Bereich von 1000 bis 2000 g/mol und
e) einem einzigen Polyethylenglykolmonomethylester mit einem gewichtsmittleren Molekulargewicht im Bereich von 1050 bis 1350 g/mol,
f) entweder in Gegenwart oder in Abwesenheit von einer oder mehreren vernetzend wirkenden Verbindungen mit 3 bis 6 zur Polykondensation befähigten Funktionen, insbesondere Säure-, Alkohol- oder Esterfunktionen, mit der Maßgabe, dass die Komponenten d) in Gewichtsmengen < 80%, bezogen auf die Gewichtsmenge der durch die Polymerisation erhaltenen Polyester, eingesetzt wird, wobei das Molekulargewicht mittels der in der Anmeldung angegebenen Methode bestimmt wird.

2. Verwendung von Polyestern gemäß Anspruch 1, **dadurch gekennzeichnet, dass** die Umesterung und Kondensation der Komponenten a) bis e) in Gegenwart oder in Abwesenheit der Komponente f) in Gegenwart von Umesterungs- und Kondensationskatalysatoren stattfindet.

3. Verwendung von Polyestern gemäß einer oder mehrerer der vorhergehenden Ansprüche, **dadurch gekennzeichnet, dass** als Komponente f) Verbindungen ausgewählt aus der Gruppe, bestehend aus Zitronensäure, Äpfelsäure, Weinsäure, Gallussäure, 2,2-Dihydroxymethylpropionsäure, Pentaerythritol, Glycerol, Sorbitol, Mannitol, 1,2,3-Hexantriol, Benzol-1,2,3-tricarbonsäure (Hemimellithsäure), Benzol-1,2,4-tricarbonsäure (Trimellithsäure) und Benzol-1,3,5-tricarbonsäure (Trimesithsäure) verwendet werden.

4. Verwendung von Polyestern gemäß einer oder mehrerer der vorhergehenden Ansprüche, **dadurch gekennzeichnet, dass** sie durch Polymerisation der Komponenten a) bis e) entweder in Gegenwart oder in Abwesenheit der Komponente f) in folgenden Molverhältnissen, jeweils bezogen auf 1 Mol Komponente a) erhältlich sind:
0,2 bis 0,8 Mol, vorzugsweise 0,3 bis 0,7 Mol, insbesondere 0,4 bis 0,6 Mol, ganz besonders bevorzugt 0,5 bis 0,6 der Komponente b), und
1,0 bis 2,0 Mol, vorzugsweise 1,1 bis 1,6 Mol, insbesondere 1,2 bis 1,5 Mol, ganz besonders bevorzugt 1,3 bis 1,4 Mol der Komponente c), und
0,05 bis 2,0 Mol, vorzugsweise 0,10 bis 1,0 Mol, insbesondere 0,2 bis 0,8 Mol, ganz besonders bevorzugt 0,25 bis 0,5 Mol der Komponente d), und
0,01 bis 1,0 Mol, vorzugsweise 0,05 bis 0,8 Mol, insbesondere 0,1 bis 0,5 Mol, ganz besonders bevorzugt 0,11 bis 0,3 Mol, Komponente e), und
entweder in Gegenwart von 0,00001 bis 1,0 Mol, vorzugsweise 0,00001 bis 0,5 Mol, insbesondere 0,0001 bis 0,01 Mol, ganz besonders bevorzugt 0,0002 bis 0,01 Mol, Komponente f) oder in Abwesenheit von Komponente f).

5. Verwendung von Polyestern gemäß einer oder mehrerer der vorhergehenden Ansprüche, **dadurch gekennzeichnet, dass** die verwendeten Polyester gewichtmittlere Molekulargewichte im Bereich von 700 bis 50.000 g/mol aufweisen, wobei das Molekulargewicht mittels der in der Anmeldung angegebenen Methode bestimmt wird.

6. Verwendung von Polyestern gemäß einer oder mehrerer der vorhergehenden Ansprüche, **dadurch gekennzeichnet, dass** der Gewichtsanteil der Restmonomere aus den zur Polymerisation eingesetzten Komponenten a) bis e) und optional f) im Polyester, jeweils < 1 % bezogen auf das Gewicht des Polyesters beträgt.

7. Verwendung von Polyestern gemäß einer oder mehrerer der vorhergehenden Ansprüche, **dadurch gekennzeichnet, dass** die Polyester als wässrige Dispersion verwendet werden, wobei die Polyester in Konzentrationen von 10 bis 30 Gew.-% bezogen auf die fertige, wässrige Dispersion vorliegen.

8. Verwendung von Polyestern gemäß einer oder mehrerer der vorhergehenden Ansprüche, **dadurch gekennzeichnet, dass** diese im Papierherstellverfahren oder dem Papierrecyclingverfahren der Papierfasermasse als Dispersion in Mengen von bevorzugt 200 bis 1.000 g Polyester (100% Aktivsubstanz) pro Tonne trockener Papierfaser zugeführt, dort homogen verteilt werden und zur Wirkung kommen.

9. Verwendung von Polyestern gemäß einer oder mehrerer der vorhergehenden Ansprüche zur Steigerung der Dispergierbarkeit hydrophober Fasern.

10. Verwendung von Polyestern gemäß einer oder mehrerer der vorhergehenden Ansprüche, zur Verbesserung des Druckverhaltens von ölbasierenden Druckfarben auf hydrophoben Oberflächen.

## Claims

1. Use of polyesters for increasing the surface tension and improving the hydrophilic behaviour of hydrophobic surfaces, **characterised in that** the polyesters are obtainable by polymerisation of
a) terephthalic acid dimethyl ester, and
b) ethylene glycol,
c) 1,2-propylene glycol, and
d) one or more polyalkylene glycols having weight average molecular weights in the range of 1000 to 2000 g/mol, and
e) a single polyethylene glycol monomethyl ester having a weight average molecular weight in the range of 1050 to 1350 g/mol,
f) either in the presence or in the absence of one or more crosslinking compounds having 3 to 6 functions capable of polycondensation, in particular acid, alcohol or ester functions, with the proviso that the components d) are used in amounts by weight < 80%, based on the amount by weight of the polyesters obtained by polymerization, the molecular weight being determined by the method indicated in the application.

2. Use of polyesters according to claim 1, **characterized in that** the transesterification and condensation of components a) to e) takes place in the presence or absence of component f) in the presence of transesterification and condensation catalysts.

3. Use of polyesters according to one or more of the preceding claims, **characterized in that** as component f) compounds selected from the group consisting of citric acid, malic acid, tartaric acid, gallic acid, 2,2-dihydroxymethylpropionic acid, pentaerythritol, glycerol, sorbitol, mannitol, 1,2,3-hexanetriol, benzene-1,2,3-tricarboxylic acid (hemimellitic acid), benzene-1,2,4-tricarboxylic acid (trimellitic acid) and benzene-1,3,5-tricarboxylic acid (trimestersitic acid) are used.

4. The use of polyesters according to one or more of the preceding claims, **characterized in that** they are obtainable by polymerization of components a) to e) either in the presence or in the absence of component f) in the following molar ratios, in each case based on 1 mol of component a):
0.2 to 0.8 mol, preferably 0.3 to 0.7 mol, in particular 0.4 to 0.6 mol, very particularly preferably 0.5 to 0.6 mol, of component b), and
1.0 to 2.0 mol, preferably 1.1 to 1.6 mol, in particular 1.2 to 1.5 mol, very preferably 1.3 to 1.4 mol of component c), and
0.05 to 2.0 mol, preferably 0.10 to 1.0 mol, in particular 0.2 to 0.8 mol, very preferably 0.25 to 0.5 mol of component d), and
0.01 to 1.0 mol, preferably 0.05 to 0.8 mol, in particular 0.1 to 0.5 mol, most preferably 0.11 to 0.3 mol, of component e), and
either in the presence of 0.00001 to 1.0 mol, preferably 0.00001 to 0.5 mol, in particular 0.0001 to 0.01 mol, most preferably 0.0002 to 0.01 mol, of component f) or in the absence of component f).

5. Use of polyesters according to one or more of the preceding claims, **characterized in that** the polyesters used have weight-average molecular weights in the range from 700 to 50,000 g/mol, the molecular weight being determined by the method indicated in the application.

6. Use of polyesters according to one or more of the preceding claims, **characterized in that** the proportion by weight of the residual monomers from the components a) to e) and optionally f) used for polymerization in the polyester is in each case < 1% based on the weight of the polyester.

7. Use of polyesters according to one or more of the preceding claims, **characterized in that** the polyesters are used as an aqueous dispersion, the polyesters being present in concentrations of 10 to 30% by weight based on the finished aqueous dispersion.

8. Use of polyesters according to one or more of the preceding claims, **characterized in that** they are added to the paper fibre mass as a dispersion in quantities of preferably 200 to 1,000 g of polyester (100% active substance) per tonne of dry paper fibre in the paper manufacturing process or the paper recycling process, are homogeneously distributed in it and take effect.

9. Use of polyesters according to one or more of the preceding claims for increasing the dispersibility of hydrophobic fibers.

10. Use of polyesters according to one or more of the preceding claims, for improving the printing behaviour of oil-based printing inks on hydrophobic surfaces.

## Revendications

1. Utilisation de polyesters pour augmenter la tension superficielle et améliorer le comportement hydrophile des surfaces hydrophobes, **caractérisée en ce que** les polyesters peuvent être obtenus par polymérisation de
a) l'ester diméthylique d'acide téréphtalique, et
b) l'éthylène glycol,
c) le 1,2-propylène glycol, et
d) un ou plusieurs polyalkylène glycols ayant des poids moléculaires moyens en poids dans la plage de 1000 à 2000 g/mol et
e) un seul ester monométhylique de polyéthylène glycol ayant un poids moléculaire moyen en poids dans la plage de 1050 à 1350 g/mol,
f) soit en présence soit en l'absence d'un ou de plusieurs composés ayant une action réticulante, ayant 3 à 6 fonctions capables de polycondensation, en particulier des fonctions acide, alcool ou ester, à condition que le composant d) soit mis en œuvre en des quantités en poids < 80 %, par rapport à la quantité en poids des polyesters obtenus par polymérisation, le poids moléculaire étant déterminé au moyen de la méthode indiquée dans la demande.

2. Utilisation de polyesters selon la revendication 1, **caractérisée en ce que** la transestérification et condensation des composants a) à e) en présence ou en l'absence du composant f) se produit en présence de catalyseurs de transestérification et de condensation.

3. Utilisation de polyesters selon l'une ou plusieurs des revendications précédentes, **caractérisée en ce que** l'on utilise comme composant f) des composés choisis dans le groupe constitué de l'acide citrique, de l'acide malique, de l'acide tartrique, de l'acide gallique, de l'acide 2,2-dihydroxyméthylpropionique, du pentaérythritol, du glycérol, du sorbitol, du mannitol, du 1,2,3-hexanetriol, de l'acide benzène-1,2,3-tricarboxylique (acide hémiméllitique), l'acide benzène-1,2,4-tricarboxylique (acide triméllitique) et l'acide benzène-1,3,5-tricarboxylique (acide trimésitique).

4. Utilisation de polyesters selon l'une ou plusieurs des revendications précédentes, **caractérisée en ce qu'**ils peuvent être obtenus par polymérisation des composants a) à e) soit en présence soit en l'absence du composant f) dans des rapports molaires suivants, respectivement par rapport à 1 mole du composant a) :
0,2 à 0,8 mole, de préférence 0,3 à 0,7 mole, en particulier 0,4 à 0,6 mole, de manière tout particulièrement préférée 0,5 à 0,6 mole du composant b), et
1,0 à 2,0 moles, de préférence 1,1 à 1,6 moles, en particulier 1,2 à 1,5 mole, de manière tout particulièrement préférée 1,3 à 1,4 mole du composant c), et
0,05 à 2,0 moles, de préférence 0,10 à 1,0 mole, en particulier 0,2 à 0,8 mole, de manière tout particulièrement préférée 0,25 à 0,5 mole du composant d), et
0,01 à 1,0 mole, de préférence 0,05 à 0,8 mole, en particulier 0,1 à 0,5 mole, de manière tout particulièrement préférée 0,11 à 0,3 mole du composant e), et
soit en présence de 0,00001 à 1,0 mole, de préférence 0,00001 à 0,5 mole, en particulier 0,0001 à 0,01 mole, de manière tout particulièrement préférée 0,0002 à 0,01 mole du composant f) ou en l'absence du composant f).

5. Utilisation de polyesters selon l'une ou plusieurs des revendications précédentes, **caractérisée en ce que** les polyesters utilisés présentent des poids moléculaires moyens en poids dans la plage de 700 à 50 000 g/mol, le poids moléculaire étant déterminé au moyen de la méthode indiquée dans la demande.

6. Utilisation de polyesters selon l'une ou plusieurs des revendications précédentes, **caractérisée en ce que** la proportion en poids de monomères résiduels à partir des composants a) à e) et éventuellement f), mis en œuvre pour la polymérisation, dans le polyester, est respectivement < 1 % par rapport au poids du polyester.

7. Utilisation de polyesters selon l'une ou plusieurs des revendications précédentes, **caractérisée en ce que** les polyesters sont utilisés en tant que dispersion aqueuse, les polyesters se présentant en des concentrations de 10 à 30 % en poids par rapport à la dispersion aqueuse finie.

8. Utilisation de polyesters selon l'une ou plusieurs des revendications précédentes, **caractérisée en ce que** ceux-ci sont amenés dans le procédé de fabrication du papier ou le procédé de recyclage du papier à la masse de fibres de papier sous forme de dispersion en quantités de préférence de 200 à 1000 g de polyester (100 % de substance active) par tonne de fibres de papier sèches, y sont distribués de manière homogène et viennent à agir.

9. Utilisation de polyesters selon l'une ou plusieurs des revendications précédentes, pour augmenter la dispersibilité des fibres hydrophobes.

10. Utilisation de polyesters selon l'une ou plusieurs des revendications précédentes pour améliorer le comportement d'impression des encres d'impression à base d'huile sur des surfaces hydrophobes.
